Europäisches Patentamt

European Patent Office

Office européen des brevets

(11) Publication number: **0 223 531**
A2

(12)
# EUROPEAN PATENT APPLICATION

(21) Application number: 86308737.5

(22) Date of filing: 10.11.86

(51) Int. Cl.⁴: **B 32 B 27/08,** B 65 D 65/40

(30) Priority: 12.11.85 US 797271

(43) Date of publication of application: 27.05.87
Bulletin 87/22

(84) Designated Contracting States: AT BE CH DE ES FR GB
IT LI NL SE

(71) Applicant: THE DOW CHEMICAL COMPANY, 2030 Dow
Center Abbott Road P.O. Box 1967, Midland,
MI 48640 (US)

(72) Inventor: Lancaster, Gerald M., 303 Tarpon Avenue,
Surfside Freeport Texas 77541 (US)
Inventor: Edmondson, Morris S., Route 7 130 Mohawk
Dr., Alvin Texas 77511 (US)

(74) Representative: Burford, Anthony Frederick et al, W.H.
Beck, Greener & Co. 7 Stone Buildings Lincoln's Inn,
London WC2A 3SZ (GB)

(54) Containers having internal barrier layers.

(57) Containers for food products, particularly fruit juices and
beverages containing essential oils or flavorings are comprised
of a laminate structure in which the inner surface of the con-
tainer, in contact with the food product is a halopolymer, such
as a vinylidene chloride polymer, which functions as a barrier
layer to substantially restrict the passage or migration of the es-
sential oils or flavorings.

## CONTAINERS HAVING INTERNAL BARRIER LAYERS

Containers are constructed of multi-ply materials in which a halopolymer barrier layer comprises the internal surface of the container.

There is a perceived need for food containers which have the ability to protect ingredients packaged therein against loss of essential oils and/or flavorings, such as fruit or citrus juices, beverages, and the like. Paperboard coated with polyethylene has been tried for this purpose, but it falls short of providing an acceptable container because polyethylene absorbs, or permits the migration of, an appreciable amount of the essential oils and/or flavorings. The loss of these oils and/or flavorings results in a loss of taste and aroma of the ingredient, such as orange juice.

For example, U.S. Patent 4,513,036 relates to various containers for storing orange juice. However, all the orange juices in those containers lost from 39.5 to 60.5 percent of essential oil (d-limonene)

34,548-F

over a six week storage period. All the containers used nonhalogenated polyethylene in direct contact with the orange juice.

U.S. Patent No. 3,464,546 discloses a multi-layer container for latex and oil based paints wherein the inner layer is an oxygen barrier resin, such as a vinylidene chloride polymer. Its purpose is to present corrosion of the metal container.

U.S. Pat. No. 3,560,227 discloses high barrier coated papers which include, inter alia, the use of a vinylidene chloride polymer sandwiched between two layers of polyethylene which are adhered to a paper base, said to be useful as a barrier for oxygen and water vapor.

The use of polyethylene film as a packaging material is well known, including packages which employ a multi-layer construction wherein the polyethylene is the layer which is in direct contact with packaged ingredients. Prior to our invention, it had been generally believed that a barrier layer (such as a vinylidene chloride polymer) in a multi-layer construction would be equally effective as a barrier, even though it is not the layer in contact with the packaged ingredients; this belief is well-founded when considering only the barrier properties for oxygen and water vapor. We have now found, however, that when a barrier for the essential oils and/or flavorings in products such as juices or beverages is needed, then the halopolymer, such as a polymer of vinylidene chloride, must be the layer in direct contact with the

34,548-F

juices and beverages in order to be efficient. We have found that if there is a layer of polyethylene between the halopolymer and the packaged juices and beverages, then the polyethylene absorbs a significant amount of the essential oils and/or flavorings and having the halopolymer behind the polyethylene does not prevent the absorption into the polyethylene. The loss of essential oils and/or flavorings results in loss of flavor and aroma and the storage time (shelf-life) is considerably shortened if polyethylene is the layer in contact with the juices and/or beverages.

Of importance among the essential oils and/or flavorings are terpenes. Limonene is a cyclic terpene which can be dextro or laevo; d-limonene is an essential oil found in citrus fruits; it provides at least a large percentage of the distinctive flavor and aroma of citrus fruits. Other aroma/flavoring ingredients found in nature's products are included within the meaning of the expression "essential oils and/or flavorings". For instance, vanillin (the aroma and flavor constituent of vanilla bean extract), eugenol (the chief constituent of oil of cloves) and isoeugenol (in nutmeg oil) are among the flavorings added to food products such as baked goods and dry cereals and the like.

A technique has been developed (Journal of The A.O.A.C., Vol. 49, No. 3, 1966, p. 628) which measures the approximate concentration of d-limonene in orange juice as a measure of the essential oils and flavorings. A loss of d-limonene upon storage causes a perceptible change in taste and aroma; this loss of

34,548-F

d-limonene and change in taste and aroma is undesirable and should be avoided.

The present invention relates to a container, for foods, juices or beverages which contain essential oils and/or flavorings that tend to migrate into or through polyethylene, provided with an inner-wall barrier layer of a halopolymer, such as a layer of poly(vinyl chloride/vinylidene chloride). The container is made of a laminate structure comprising a substrate layer (e.g. paper board) bonded to the inner-wall barrier layer, by an adhesive layer between them. The adhesive layer bonds the inner-wall barrier layer to the substrate; beneficially the adhesive layer may be an RF-heatable or MW-heatable polymer, such as a copolymer of ethylene/carbon monoxide (E/CO), ethylene/-acrylic acid/ carbon monoxide (E/AA/CO), or ethylene/-vinyl acetate/carbon monoxide (E/VA/CO), and the like. Optionally, there may be an outer wall layer on the substrate which may be the same material as the said adhesive layer The halopolymer barrier may be the inner wall of a large variety of laminate structures which include a substrate layer. The "substrate" may, itself, be a multi-layer laminate having a main layer and one or more auxiliary or filler layers.

The container of the invention particularly resides in a container for enclosing food products which contain essential oils and/or flavorings, said container being constructed of a multi-ply structure comprising a substrate, an inner-wall barrier layer, and an adhesive layer between said substrate and said barrier layer for bonding said barrier layer to said substrate,

34,548-F

said adhesive layer comprising a polymer or resin having a solubility parameter in the range of from 8 to 14, and

said barrier layer comprising a halopolymer which substantially retards the passage or migration of the essential oils and/or flavorings from the food products enclosed therein.

In one preferred embodiment, the adhesive layer comprises ethylene copolymerized with at least one monomer selected from carbon monoxide, acrylic acid, vinyl acetate, methacrylic acid, maleic acid, itaconic acid, crotonic acid, vinyl propionate, vinyl butyrate, and alkyl acrylate and methacrylate, wherein said alkyl group contains 1-8 carbon atoms. It is particularly preferred that the adhesive layer comprises a layer or primer coat of a vinyl resin, a urethane resin, an acrylic resin, an epoxy resin, a polyamide, a polyester, polycarbonate, or polyethylene terephthalate.

It is also preferred that the substrate is a material selected from paper, paperboard, woven fabric, non-woven fabric, metal foil, metal mesh, plastic or resin sheet, plastic or resin mesh, and cellular plastic or resin.

In another preferred embodiment, the container has an outer layer adhered to the substrate on the other side from the adhesive, said outer layer being selected from a woven or non-woven fabric, a cellular plastic or resin, a thermoplastic polymer or resin, a thermosetting polymer or resin, a metal foil, paint, lacquer, and printed sheet.

The process of the invention particularly resides in a process for preserving the shelflife flavor-aroma of a liquid food characterized by enclosing the liquid in a rigid multilayer container having a liquid-contacting surface layer that is a halopolymer.

The figures are provided as visual aids (though not to scale) for use in generally describing the laminates.

In the figures the general functions of the layers are shown by letters (defined below), the cross-hatching being used to visually distinguish different layers, not to specify a particular material.

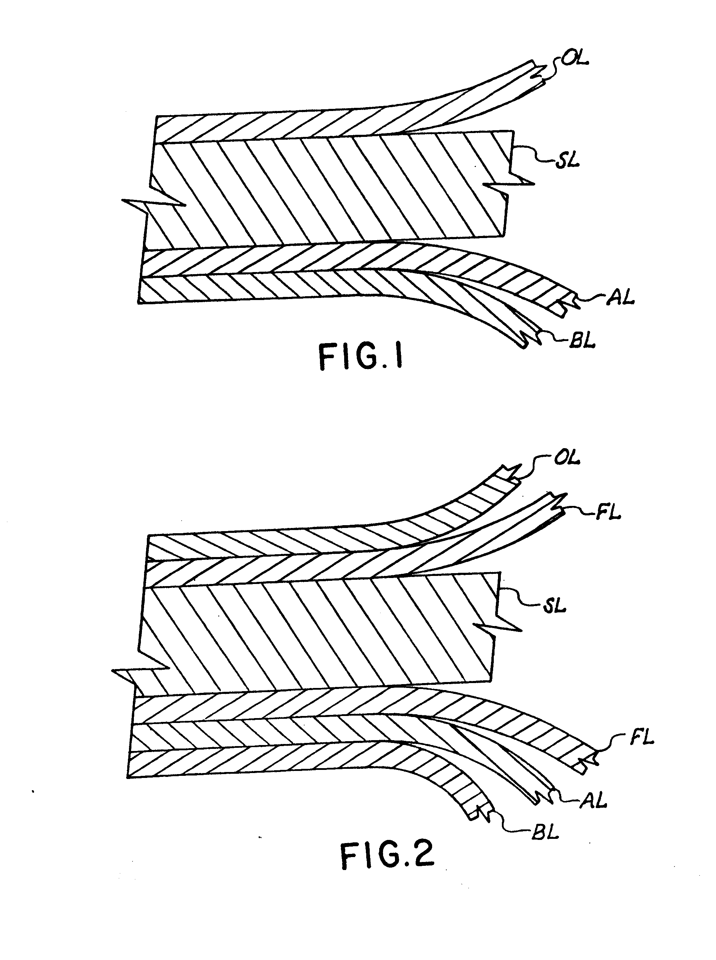

Figure 1 illustrates a cross-sectional portion of a substrate layer (SL), an adhesive layer (AL), and a barrier layer (BL); as well as an optional outer layer (OL). The barrier layer comprises the inner-wall or inner-surface of a container made from such a laminate. Figure 2 illustrates a cross-sectional portion of a substrate layer (SL), between two auxiliary or filler layers (FL), with an adhesive layer (AL) holding the halopolymer barrier layer (BL) in place as the inner-wall layer, and an outer layer (OL); the filler layers and the outer layer, are, independently, optional, depending on the result desired in the total laminate. The plies (layers) of the laminate structure are shown as partially peeled apart for illustration purposes. Various combinations of layers may be included in the laminate structure, if desired, such as described below:

1.    outer layer/filler layer/substrate layer/adhesive layer/barrier layer;

2.    outer layer/filler layer/substrate layer/filler layer/adhesive layer/barrier layer;

3.    outer layer/substrate layer/filler layer/adhesive layer/barrier layer.

4.    substrate layer/adhesive layer/barrier layer;

5.    substrate layer/filler layer/adhesive layer/-barrier layer.

6.    outer layer/substrate layer/adhesive layer/barrier layer.

In Figure 2, the FL/SL/FL portion may represent the "substrate" layer as a laminate having a main layer (the "SL") bonded on each surface to an auxiliary or filler layer (FL) or the FL/SL portion may be considered as the "substrate" layer as a laminate having a main layer (SL) bonded on one surface to an auxiliary or filler layer (FL). Likewise, in Figure 1, one may consider the substrate layer (SL) to, itself, be a multi-layer laminate having a main layer and one or more auxiliary or filler layers..

As used herein "a polymer of ethylene" means that the polymer is predominantly ethylene, but may

34,548-F

0223531

contain significant amounts of copolymerizable monomers. Likewise "a polymer of vinyl chloride or vinylidene chloride" or any other monomer, means that a polymer contains predominantly that named monomer. Somewhat similar expressions, e.g., "olefin polymers", "vinyl polymers" and the like can include copolymers as well as homopolymers. A homopolymer of vinylidene chloride is usually too brittle at low temperatures, and too unstable at melt temperature, so that vinylidene chloride is usually copolymerized with at least a minor amount of at least one other monomer.

One or more "auxiliary" or "filler" layers (FL) may be used, if desired, in order to impart various features to the laminate, such as strength, rigidity, weight, color, thickness, appearance, printability, opacity, barrier properties, processibility, toughness, reduced costs and the like. Filler layers may comprise, e.g., an olefin or vinyl polymer or copolymer, such as LDPE, HDPE, LLDPE, EVA, EAA, polypropylene, styrene copolymers, or other polymers or resins such as polycarbonate, polyester, polyamide, halopolymers, PET, PTFE, PVC, PVDC, epoxies, urethanes, and the like, including those that have been compounded with colorants, dyes, additives, pigments, dispersed solids, and the like. Such materials may also serve as the outer layer, if desired. The laminates may include both thermoplastic layers and thermosetting layers.

The containers may be in the form of cartons, (such as those in common usage for milk and beverages), boxes, bags, envelopes, tubes, and the like. Closing of the containers may be done by using an adhesive or

34,548-F

by conventional heat-sealing, such as hot air, hot bars, radiant heat and the like. Containers closed by a lid or cap are also within the ambit of the present invention; also containers which employ a sealing strip or friction closure are included.

One has the option, in those embodiments which employ layers of ethylene polymers containing copolymerized moieties of carbon monoxide, of heat-sealing by using high frequency (especially microwave frequency) energy whereby heat is generated from within the laminate, rather than rely on heat-transfer through the layers of topically-applied heat. The package or carton should be held under at least slight compression at the desired area of adhesion to cause the heated thermoplastic to weld in that area. The term " RF-heatable" refers to the ability to become heated by the action of radio frequencies; microwave frequencies are high frequency radio frequencies.

It has been determined that E/CO/acrylic acid terpolymers are especially useful as heat-plastified adhesives between layers of similar plastics or resins, layers of dissimilar plastics or resins, and/or between layers of plastics or resins and completely different substrates, such as paper, cloth, metal, glass, vitreous material, wood, leather. These terpolymers are also useful as heat-plastified adhesives between layers of solid materials, neither layer being plastic or resin.

Particularly useful laminates are those wherein a CO-containing heteropolymer, especially an E/CO, E/CO/VA, E/CO/MAA (MAA = methacrylic acid), or E/CO/AA polymer is ————————————

34,548-F

employed as an RF-sealable layer laminated, or otherwise adhered, to a barrier film of a chloropolymer such as polyvinyl halide, polyvinylidene halide, copolymers of polyvinyl halide and polyvinylidene halide, chlorinated polyolefins, chlorinated polyethylene, and the like. The amount of CO groups in the heteropolymers should be in the range of from 0.1 to 50 percent by weight, preferably from 1 to 40 percent by weight, most preferably from 5 to 30 percent by weight. Layers of other materials may be used as plies of a multi-layered structure which include the chloropolymer barrier layer on a CO-containing polymer, especially an E/CO, E/CO/VA, E/CO/MAA, or E/CO/AA polymer RF-sealable layer, including those where the E/CO, E/CO/VA, E/CO/MAA, or E/CO/AA polymer is co-extruded with other polymers. The chloropolymer may be extruded onto the E/CO, E/CO/VA, E/CO/MAA, or E/CO/AA polymer layer, or may be co-extruded with the E/CO, E/CO/VA, E/CO/MAA, or E/CO/AA polymer or may be applied as a fine-particle aqueous disperion, such as a latex, or as a solution, thereby forming a thin film on the E/CO, E/CO/VA, E/CO/MAA, or E/CO/AA. The barrier properties needed for many packages are those wherein essential oils and/or flavorings, such as d-limonene, in juices or beverages are substantially prevented from passing through, or migrating from, the packages by the use of a barrier layer in contact with the juice. A chloropolymer is found to have good barrier properties for such oils and flavorings.

Thin layers of chloropolymers alone are likely to emit heat about as fast as it is generated by RF-energy, thus thin layers are not efficiently brought to a heat-plastified condition well enough to obtain a

34,548-F

good seal, even though thin layers of the chloropolymers provide good barrier properties for the heat-
-sealable CO-containing polymer. However, the RF-active
CO-containing polymer can heat not only itself, but
also the chloropolymer, or any other layer which is in
contact with it.

The chloropolymers may also contain other copolymerized monomer moieties, such as acrylate, methacrylate,
acrylonitrile, and the like, such as: poly(vinylidene
chloride)/vinyl chloride; poly(vinylidene chloride)/
acrylonitrile; poly(vinylidene chloride)/acrylate;
poly(vinylidene chloride)/alkyl methacrylate; poly-
(vinylidene chloride)/methyl methacrylate; and terpolymers of these.

Examples of latexes (aqueous fine dispersions) of, e.g., polyvinylidene chloride and/or polyvinyl chloride which are suitable for use in this
invention generally have solids contents in the range
of from 10 to 90 weight percent, preferably from 30 to
75 weight percent and generally contain surfactants,
stabilizers, and/or surface tension modifiers, and
generally have surface tensions in the range of from 30
to 90 dynes/cm, preferably from 40 to 80 dynes/cm, when
measured at a temperature of 23°C.

Latexes available commercially as SARAN*
latexes (*A trademark of The Dow Chemical Company) may
be used, such as, SL112, SL116, SL118, SL143, and
SL159, all of which are latexes comprising vinylidene
chloride polymers which are commercially available.

34,548-F

Application of the chloropolymer to the E/CO, E/CO/VA, E/CO/MAA, and E/CO/AA films, when applied as a latex (fine-particle aqueous dispersion), is appreciably improved by first treating the CO-containing film surface with a corona discharge which improves its wettability. This corona treatment "cleans" the film surface, increases the polarity of the surface, and modifies the surface tension of the film surface. Corona treatment is provided by using, e.g., a commercially available apparatus, Model RS-96 Surface Treater from ENI Power Systems Inc. Treating levels of from 1.0 watts/$m^2$/min. to 215 watts/$m^2$/min., preferably from 20 watts/$m^2$/min. to about 100 watts/$m^2$/min. may be used. Above about 215 watts/$m^2$/min., one may encounter excessive polymer degradation. Corona treatment can also be used to surface treat other polymers to improve their bonding to other layers.

The latex may be applied to the film by spraying, brushing, or spreading, using a doctor blade or other device, if needed, to attain the desired thickness, allowing for evaporation of the aqueous carrier. One type of spreader which functions as a "doctor blade" which has been commonly used for many years in the art of laying down coatings on a substrate, is a Mayer® rod which is a round rod wrapped with wire; these come in different sizes commensurate with the desired thickness of the fluid latex to be applied. One may use a direct gravier, a flexographic, offset gravier, or trailing blade coater to apply the latex. The latex is then dried, at a temperature of from 20° to 150°C.

34,548-F

The thickness of each layer in the laminate structure can range from very thin layers of, from 0.001 to 0.13 mm to relatively thick layers of, from 1 mm to 2 mm or more, depending on the properties and stiffness desired of that layer. Generally the "substrate layer" is relatively thicker than the barrier layer, adhesive layer, or other layers and it largely contributes to the rigidity or flexibility; this includes substrate layers which comprise a main layer laminate to at least one layer of an auxiliary or filler layer.

While there are many possible laminates which may comprise or contain a CO-containing polymer with a coating of halopolymer barrier layer on it, a few examples are:

| 1.halo-polymer | 4.halo-polymer | 6.halo-polymer | 9.halo-polymer |
|---|---|---|---|
| CO-polymer | CO-polymer | CO-polymer | CO-polymer |
| substrate | internal barrier | internal barrier | printed substrate |
| filler layer | substrate | substrate | halo-polymer |
| outer layer | filler layer | adhesive | |
| | polyolefin | paper | |
| | | polyolefin | 10.halo-polymer |
| 2.halo-polymer | | print | CO-polymer |
| CO-polymer | | polyolefin | polycarbonate |
| substrate | 5.halo-polymer | | |
| polystyrene | CO-polymer | | |
| | substrate | 7.halo-polymer | |
| | filler layer | CO-polymer | 11.halo-polymer |
| 3.halo-polymer | | substrate | CO-polymer |
| CO-polymer | | CO-polymer | substrate |
| filler-layer | | | |

34,548-F

0223531

filler-layer                    8.halo-polymer

substrate                       CO-polymer

filler-layer                    substrate

outer-layer                     adhesive


    In the foregoing examples of layered structures the meaning of the terms used in describing the layers include:

halo-polymer--a thermoplastic organic polymer which contains sufficient halogen groups to provide barrier properties to substantially inhibit or prevent the passage of essential oils and/or flavorings, such as d-limonene; preferably these are polymers principally based on vinyl halide or vinylidene halide, where the halide is chloride or fluoride, or a mixture, most preferably chloride;

CO-polymer----a thermoplastic organic heteropolymer, e.g. an olefin polymer, having carbon monoxide units along the polymer chain, preferably E/CO, E/CO/VA, E/CO/MAA, or E/CO/AA, most preferably E/CO or E/CO/AA;

adhesive------a CO-polymer as described above or a thermoplastic (such as an acrylic, olefin, or vinyl polymer) or thermosetting polymer or resin (such as a urethane or epoxy) which may be used in providing adhesion of one layer to another, if needed; the adhesion layer should be one having a solubility parameter in the range of from 8 to 14, preferably from

34,548-F

8.5 to 13; outside that range the adhesive layer may tend to delaminate from the halopolymer barrier layer when used in enclosing a liquid for extended periods of time of, say, 2 weeks or more. The solubility parameters are expressed in Hildebrand units and can be determined by the method published by P. A. Small, Journal of Applied Chemistry, 3 71 (1953) or can be determined by the method published by K. W. Suh and J.M. Corbett, Polymer Preprint A.C.S., Div. IV, Vol. 9, #1.732-41 (1968).

internal barrier--this may be a second halo-polymer layer as described above, or may be another material which has desired $O_2$ or $H_2O$ barrier properties, such as polyvinylalcohol, metal foil nylon, polychlorofluoroethylene, poly ethylene terephthalate, polytetrafluoroethylene, polyethylene/vinyl alcohol copolymer, acrylonitrile polymers and copolymers, and the like;

filler layer--this may comprise an olefin polymer, vinyl polymer, or copolymer, such as LDPE, HDPE, LLDPE, EVA, EAA, polypropylene, polyester, polyamide, halopolymer, PET, PTFE, PVC, PVDC, and the like, including those that have been compounded with colorants, dyes, additives, pigments, dispersed solids, and the like. Such materials may also serve as the outer layer if desired, and in

34,548-F

0223531

appropriate circumstances may serve as an internal barrier.  Or it may be a material such as identified herein as a barrier layer.

outer-layer---this may be, e.g., a thermoplastic polymer, a thermosetting resin, a halopolymer, an olefin polymer, a vinyl polymer, a CO-polymer, a polyester, a polyamide, a metal foil, paper, or may be the same material as used as a barrier layer, a filler layer, an adhesive layer, or as the substrate.

paper---------this may be, e.g., Kraft paper or paperboard or other pressed fibrous material and the like, such as those prepared in a Fourdrinier process;

print--------this may be, e.g., any printed matter, such as words, numbers, logos, designs, etc. which may be printed on at least one ply of a laminate;

substrate-----this may be, e.g., a layer of natural material, such as cloth, cellulosic-based, wood fiber product, metal, ceramic, or refractory material, or may be a synthetic material such as thermoplastic or thermosetting materials or polymeric condensates, including sintered, woven, non-woven, cast, foamed, or fused materials; this includes, inter alia, HDPE, LLDPE, LDPE, polycarbon ate, halopolymers, polypropylene, other polyolefins, polyacrylates, vinyl polymers, epoxides, urethanes, and the like.

34,548-F

Some of the solubility parameters of polymers, calculated and observed, published by P. A. Small (see supra) are as follows:

| Polymer | Calc. | Obs. |
|---|---|---|
| Polyisobutylene | 7.70 | 8.05 |
| Polythene | 8.1 | 7.9 |
| Natural rubber | 8.15 | 7.9-8.35 |
| Polybutadiene | 8.38 | 8.4-8.6 |
| Butadiene/Styrene: | | |
| 85:15 | 8.48 | 8.5 |
| 75:15 | 8.54 | 8.09-8.6 |
| 60:40 | 8.65 | 8.67 |
| Polystyrene | 9.12 | 8.6-9.7 |
| Polystyrene/divinylbenzene | | 9.1 |
| Buna N (butadiene 75:acrylonitrile 25) | | 9.5 |
| Polymethyl methacylate | 9.25 | 9-9.5 |
| Neoprene GN | 9.38 | 8.18-9.25 |
| Polyvinyl acetate | 9.4 | |
| Polyvinyl chloride | 9.55 | 9.48-9.7 |
| Polyvinyl bromide | 9.6 | 9.5 |
| Polymethyl chloroacrylate | 10.1 | |
| Cellulose dinitrate | 10.48 | 10.56 |
| Polyglycol terephthalate | 10.7 | |
| Polymethacrylonitrile | 10.7 | |
| Cellulose diacetate | 11.35 | 10.9 |
| Polyacrylonitrile | 12.75 | |

As mentioned supra, the adhesive layer is preferably an olefin heteropolymer or copolymer with carbon monoxide copolymerized into the polymer chain during the polymerization process. These polymers exhibit very good adhesion to halo-polymers such as VDC polymers and the like. Such CO-containing polymers are heat-sealable by conventional

34,548-F

methods and also are sealable by radio frequency (RF) energy, and even microwave (MW) energy. This is particularly beneficial when such type of sealing is desired in a packaging production line in which sealing by topically-applied heat is not practical or is not as efficient. While preferably the CO-containing heteropolymers are copolymers of ethylene/carbon monoxide (E/CO), ethylene/acrylic acid/ carbon monoxide (E/AA/CO), ethylene/ methacrylic acid/ carbon monoxide (E/MAA/CO), ethylene/vinyl acetate/carbon monoxide (E/VA/CO), one may also use others, e.g., ethylene/ ethyl acrylate/-carbon monoxide (E/EA/CO), ethylene/methyl acrylate/-carbon monoxide (E/MA/CO), ethylene/methyl methacrylate/carbon monoxide(E/MMA/CO), ethylene/ethyl methacrylate/ carbon monoxide (E/EMA/CO), and the like.

The substrate may be, e.g., a flexible, semi-rigid, or rigid material such as paper, paperboard, polyethylene, metal, polyamide, an acrylate polymer, a vinyl polymer, polyethyleneterephthalate, fiberglass mat or cloth, polyurethane, polyester, polyepoxide a styrene polymer, a cellular polymer or resin, or wood fiber products, depending on the configuration and rigidity desired in the final laminate structure and the container constructed thereof. It will be understood that the more plies or layers of materials there are in the laminate the stiffer it becomes.

The outer layer may be of the same material as used in a filler layer, barrier layer or barrier coating or as an adhesive layer, or may be different. Generally the outer layer is used for esthetic purposes, for scuff-resistence, for heat-sealability, for

34,548-F

handling, for marketing, for printability, for insulation, for protection of the substrate or coated substrate, or as a barrier against outside contamination, oxygen or moisture. Also an outside layer may be used to improve the physical strength, rigidity, or dimensional stability of the container.

The laminates may be prepared in accordance with known techniques by bringing together the respective layers and causing them to form an adhered multi-ply material which is then fashioned into the desired configuration for use as a container. Or some or all of the layers may be co-extruded into a multi-ply laminate form. The techniques for making laminates and containers are known to skilled artisans.

The barrier layer, while it may be applied by a melt-extrusion step or as a solution-coating, is beneficially applied as a film-forming latex-type (very fine particle particle aqueous dispersion), such as when a Saran® latex (*trademark of the Dow Chemical Company) is spread onto the substrate, or onto an adhesive layer or filler layer, then dried into a thin film. By using such a latex there is generally less tendency for pin-holes to be formed, in comparison to the same thickness of film when melt-extruded. Most preferably, two thin layers of latex are applied as an added safeguard against pin-holes. If a barrier layer of, say, 0.01 mm thickness is desired, it is better to apply two layers of 0.005 mm each.

The following examples are given to illustrate certain embodiments of the invention, but the invention is not limited to the embodiments shown.

34,548-F

In the Examples which follow, not all orange juice samples started with the same concentration of d-limonene. Unless stated otherwise, all paper layers were bleached Kraft paper of 0.04 kg/m². It should be noted that some of the Examples of the invention below gave results as good as, or beter than, the glass control Comperative Examples.

Example 1

Test packets were made in which laminates of 15.2 cm x 22.9 cm were folded into envelope or bag shapes and thermally sealed about 1.3 to 2 cm from the edges to enclose 50 cc of orange juice. These packets were stored at or temperature of 4.4°C and sampled at intervals to analyze the concentration of d-limonene. Control samples were stored in a glass containers at the same temperature. In Table I below, Laminate A was bleached Kraft paper coated with 0.025 mm of an adhesive, viz., ethylene/carbon monoxide copolymer (E/CO) which contained 10% CO in the polymer; this Laminate A is for comparison purposes. Laminate B is an example of the present invention and is the same as Laminate A except that it is coated with 2 layers of Saran® 112 latex (A vinylidene chloride polymer) to a thickness of about 0.005mm. There is some experimental error in the test used for measuring d-limonene, but each measurement is believed to be accurate to about ±5 percentage points of the measured value. As can be seen from the data, there is virtually no difference in loss of d-limonene between the glass control and Laminate B.

34,548-F

## Table I
### Parts Per Million(ppm) of d-Limonene

| Days at 4.4°C | Glass (control)* | Laminate A (control)* | Laminate B (barrier layer) |
|---|---|---|---|
| 0 | 126 | 126 | 126 |
| 0.5 | 126 | 110 | 119 |
| 1 | 116 | 53 | 114 |
| 2 | 119 | 47 | 113 |
| 5 | 114 | 30 | 110 |
| 7 | 119 | 19 | 114 |
| 9 | 119 | 15 | 115 |
| 14 | 110 | 4 | 109 |

*not examples of invention, but comparative examples.

### Example 2

In test packets prepared substantially in accordance with the procedure of Example 1, the following laminates were tested, with Laminates C and D being illustrations of the present invention. The paper used in the following described laminates was the same kind of paper as in Example 1.

Laminate A - paper coated with 0.025 mm LDPE.

Laminate B - paper coated with 0.025 mm E/CO.

Laminate C - Laminate B coated with single 0.0025 mm layer of Saran® 112 latex.

Laminate D - Laminate B coated with two layers of 0.0025 mm each of Saran® 112 latex

### Table II

| Days at | Parts Per Million(ppm) of d-Limonene | | | |
|---------|------|------|-----|-----|
| 4.4°C | A** | B** | C | D |
| 0 | 122 | 122 | 122 | 122 |
| 0.5 | 98 | 100 | 120 | 122 |
| 2 | 48 | 52 | 119 | 119 |
| 3 | 45 | 47 | 119 | 118 |
| 4 | 43 | 46 | 119 | 119 |
| 7 | 30 | 29 | 118 | 118 |

** Control runs, not invention.

Laminate C gave such efficient d-limonene retention (aroma retention) that an additional layer (D) of the barrier coating provided no substantial change during this short test period, but in a more extended test period the double-coat would be expected to assure continued efficiency.

### Example 3

Substantially as in Example 1, the following laminates were made into test packets and tested for d-limonene retention. The paper was the same as in Example 1.

Laminate A - paper coated with LDPE (0.025 mm).

Laminate B - paper coated with E/CO adhesive (0.025 mm) a and single barrier coat of Saran® 159 latex of 0.0025 mm.

Laminate C - paper coated with E/CO adhesive (0.025 mm) and a single barrier coat of Saran® 112 latex of 0.0025 mm.

Laminate D - paper coated with E/CO adhesive (0.025 mm) and a double coat of Saran® 112 latex of 0.005 mm.

Laminate E - paper/0.025 mm LDPE/Al foil/0.025 mm LDPE.

34,548-F

Laminate F - commercially available Saranex® S-11 barrier film comprising a co-extrusion of a Saran® polymer encased in LDPE skins.

Table III

| Days at 4.4°C | Parts Per Million(ppm) of d-Limonene | | | | | |
|---|---|---|---|---|---|---|
| | A** | B | C | D | E** | F** |
| 0 | 113 | 113 | 113 | 113 | 113 | 113 |
| 0.5 | 65 | 114 | 110 | 110 | 63 | 56 |
| 1 | 55 | 110 | 112 | 113 | 54 | 53 |
| 3 | 32 | 108 | 105 | 110 | 34 | 44 |
| 4 | 23 | 110 | 108 | 113 | 40 | 40 |
| 7 | 23 | 106 | 100 | 109 | 29 | 39 |
| 11 | 12 | 100 | 87 | 107 | 28 | 31 |

** Control runs, not invention.

It is found that if the barrier material is <u>not</u> the inner-wall layer as in Laminates E and F, then its barrier properties are not effectively realized for aroma retention as measured by d-limonene retention. In Laminate F (also A and E) LDPE is the inner-wall layer and is not a good barrier.

## Example 4

Another set of packets were tested of the following laminates:

Laminate A - paper coated with E/CO layer, 0.025 mm.

Laminate B - Laminate A coated with single coat (0.0025 mm) of Saran® 112 latex.

Laminate C - Laminate A double-coated (0.005 mm) with Saran® 112 latex.

Laminate D - paper coated with 0.025 mm EVA (18%VA)

34,548-F

Laminate E - Laminate D coated with 0.0025 mm Saran® 1
12 latex.

Laminate F - Laminate D coated with double-coat
(0.005 mm) of Saran® 112 latex.

<u>Table IV</u>

| Days at 4.4°C | Parts Per Million(ppm) of d-Limonene | | | | | |
|---|---|---|---|---|---|---|
| | <u>A**</u> | <u>B</u> | <u>C</u> | <u>D**</u> | <u>E</u> | <u>F</u> |
| 0 | 146 | 146 | 146 | 146 | 146 | 146 |
| 0.5 | 126 | 152 | 151 | 119 | 146 | 148 |
| 1 | 88 | 152 | 151 | 84 | 141 | 140 |
| 3 | 51 | 150 | 150 | 46 | 130 | 134 |
| 6 | 28 | 144 | 148 | 24 | 110 | 112 |
| 9 | 16 | 141 | 148 | 16 | 95 | 112 |
| 14 | 12 | 138 | 148 | 8 | 91 | 83 |

**Control runs, not invention.

## Example 5

Test packets were made and tested of the
following laminates.

Laminate A - paper coated with 0.025mm E/CO and double-
-coated (0.005mm) with Saran® 112 latex.

Laminate B - paper extrusion-laminated to vinylidene
chloride polymer (Saran Wrap® film) (0.01 mm),
using 0.025 mm E/CO as adhesive layer.

34,548-F

0223531

<u>Table V</u>

| Days at 4.4°C | Parts Per Million (ppm) of d-Limonene | |
|---|---|---|
| | <u>A</u> | <u>B</u> |
| 0 | 131 | 131 |
| 1 | 132 | 131 |
| 2 | 132 | 127 |
| 3 | 132 | 130 |
| 6 | 134 | 129 |
| 8 | 133 | 126 |
| 9 | 134 | 126 |
| 13 | 134 | 127 |

This example compares an extrusion-laminated barrier layer with a latex-applied barrier coating; both are effective.

<u>Example 6</u>

Further test packets were made using the following structures:

Structure A - paper coated with 0.025 mm E/CO and double-coated with Saran® 112 latex (0.005 mm).

Structure B - film of polypropylene (0.025 mm).

Structure C - a 0.025 mm film prepared from a 64/30/6 blend by weight, respectively, of Saran® film polymer, LDPE, and a compatabilizer.

Structure D - same as C, except used HDPE instead of LDPE.

34,548-F

## Table VI

| Days at 4.4°C | Parts Per Million (ppm) of d-Limonene | | | |
|---|---|---|---|---|
| | A | B** | C | D |
| 0 | 158 | 158 | 158 | 158 |
| 0.5 | 158 | 114 | 135 | 144 |
| 1 | 156 | 84 | 122 | 134 |
| 2 | 158 | 59 | 112 | 126 |
| 5 | 159 | 32 | 98 | 116 |
| 8 | 160 | 13 | 82 | 110 |

**Control run, not invention.

This shows that the barrier property of the halopolymer barrier layer is substantially retained, even when mixed with (i.e. diluted) with polyethylene. Also it shows that polypropylene makes a poor barrier for d-limonene.

34,548-F

CLAIMS:

1. A container for enclosing food products, which contain essential oils and/or flavorings,

said container being constructed of a multiply structure comprising a substrate, an inner-wall barrier layer, and an adhesive layer between said substrate and said barrier layer for bonding said barrier layer to said substrate,

said adhesive layer comprising a polymer or resin having a solubility parameter in the range of from 8 to 14 (Hildebrand units), and

said barrier layer comprising a halopolymer which substantially retards the passage or migration of the essential oils and/or flavorings from the food products enclosed therein.

2. A container as claimed in Claim 1, wherein the adhesive layer comprises ethylene copolymerized with at least one monomer selected from carbon monoxide, acrylic acid, vinyl acetate, methacrylic acid, maleic acid, itaconic acid, crotonic acid, vinyl propionate, vinyl butyrate, and alkyl acrylate and methacrylate, wherein said alkyl group contains 1-8 carbon atoms.

3. A container as claimed in Claim 1 or 2, wherein the adhesive layer comprises a layer or primer coat of a vinyl resin, a urethane resin, an acrylic resin, an epoxy resin, a polyamide, a polyester, polycarbonate, or polyethylene terephthalate.

4.   A container as claimed in Claim 1, 2 or 3, wherein the halopolymer comprises a polymer of vinyl halide, and/or vinylidene halide wherein the halide is chloride and/or fluoride.

5.   A container as claimed in any one of the preceding claims, wherein the halopolymer is a polymer of vinyl chloride and/or vinylidene chloride, optionally containing a minor amount of at least one other copolymerizable olefin or vinyl compound.

6.   A container as claimed in any one of the preceding claims, wherein the substrate is a material selected from paper, paperboard, woven fabric, non-woven fabric, metal foil, metal mesh, plastic or resin sheet, plastic or resin mesh, and cellular plastic or resin.

7.   A container as claimed in any one of the preceding claims, including an outer layer adhered to the substrate on the other side from the adhesive, said outer layer being selected from a woven or non-woven fabric, a cellular plastic or resin, a thermoplastic polymer or resin, a thermosetting polymer or resin, a metal foil, paint, lacquer, and printed sheet.

8.   A container as claimed in any one of the preceding claims, wherein the substrate is a multi-layer laminate comprising a main layer bonded on at least one of its surfaces to an auxiliary or filler layer.

9. A container as claimed in any one of the preceding claims, containing a dry cereal, baked goods or citrus juice.

10. A process for preserving the shelflife flavor-aroma of a liquid food characterized by enclosing the liquid in a rigid multilayer container having a liquid-containing surface layer that is a halopolymer.

11. A process as claimed in Claim 10, wherein the container is as defined in any one of Claims 1 to 8.

0223531

1 / 1

FIG.1

FIG.2